# EUROPÄISCHE PATENTSCHRIFT

(11) **EP 0 535 542 B1**
(45) Veröffentlichungstag und Bekanntmachung des Hinweises auf die Patenterteilung: **28.06.1995**
(21) Anmeldenummer: 92116392.9
(22) Anmeldetag: 24.09.1992
(51) Int. Cl.: A61C 1/07, A61C 3/03, A61C 3/00

(54) **Vorrichtung zum passgenauen Aufbringen und Befestigen zahnmedizinischer Passkörper**
Device for setting dental crowns, bridges and the like
Dispositif pour placer avec précision des éléments prothétiques dentaires

(30) Priorität: 02.10.1991 DE 4132834
(43) Veröffentlichungstag der Anmeldung: 07.04.1993
(73) Patentinhaber: SIEMENS AKTIENGESELLSCHAFT, 80333 München (DE)
(72) Erfinder: Beerstecher, Lutz, Dipl.-Ing., W-6140 Bensheim 3 (DE); Ehmen, Gerold, Dipl.-Ing., W-6148 Heppenheim (DE); Noack, Michael G., Dr., W-1000 Berlin 27 (DE); Roulet, Jean Francois, Dr., W-1000 Berlin 19 (DE)

(56) Entgegenhaltungen:
- DE-A- 4 032 505
- US-A- 4 219 619

## Beschreibung

Die Erfindung betrifft eine Vorrichtung gemäß dem ersten Teil von Anspruch 1. Eine derartige Vorrichtung ist aus der DE-A-4 032 505 bekannt.

Zahnmedizinische Paßkörper, wie Inlays, Onlays, Kronen oder Brücken, werden in der Regel in der Weise auf dem präparierten Zahn befestigt, indem ein geeignetes Haftmittel (Zement oder Kleber) aufgebracht und danach der Paßkörper durch einen kräftigen Druck in Position gebracht wird. Durch das kräftige Aufdrücken wird überschüssiges Haftmittel, soweit es die Zwischenräume zwischen Paßkörper und Zahn zulassen, nach außen gedrückt. Häufig, und im besonderen bei waagerechten Haftflächen, kann das überschüssige Haftmittel nicht mehr vollständig entweichen, weil durch das eingeschränkte Fließverhalten des Haftmittels kein enger Klebespalt erreicht werden kann. Die Folge davon ist ein nicht paßgenauer Sitz des Paßkörpers. Eine Vergrößerung der Zwischenräume und damit der Toleranzen führt zwangsläufig zu größeren Klebespalten mit den Nachteilen, daß die Zahnübergänge bei Inlays, Onlays und Kronen schlechter werden, daß die Angriffsmöglichkeit für Bakterien erhöht und damit Sekundärkaries gefördert wird, daß die Plaquebildung und Zahnsteinablagerung gefördert wird und daß die Gefahr von partiellen Lufteinschlüssen im Klebespalt gegeben ist.

In der DE-4 032 505, in der die Verwendung von hochgefüllten dentalen Füllmaterialien zur Befestigung von Inlays, Onlays, Verblendschalen oder dergleichen beschrieben ist, wird ausgesagt, daß unter Verwendung hochfrequenter Vibrationen (mehr als 2.000 Hz und weniger als 1 MHz) hochviskose, hochgefüllte Massen eines Füllungscomposites so leichtfließend werden, daß eine optimale Benetzung mit minimaler Filmstärke des Zementierungscomposites erzielt wird. Darauf hingewiesen ist, daß geeigneterweise die hochfrequenten Vibrationen mit sog. "Sonic-Scalern" und/oder "Ultrasonic-Scalern" erzeugt werden können, die in der Zahnarztpraxis zum Entfernen von Zahnstein sowie Füllungsüberschüssen verwendet werden. Zur Befestigung der Inlays, Onlays, etc. wird vorgeschlagen, mit dem gerundeten Scaler-Mittelteil auf die Oberfläche des Paßkörpers mit geringem Druck einzuwirken, wodurch der Paßkörper in die mit Composite aufgefüllte Kavität einsinken kann. Um eine Verletzung der Inlay-Oberfläche über den Energieeintrag des Ultraschallgerätes zu vermeiden, wird weiterhin vorgeschlagen, zwischen dem Ultraschallgerät und der Oberfläche des Paßkörpers eine Zwischenschicht in Form von Papier, Wachspapier oder dergleichen vorzusehen. Alternativ kann über den Scalermittelteil auch eine geeignete Kunststoffhülse geschoben werden.

Die in dem Dokument vorgeschlagene Handhabung ist relativ umständlich. So erfordert das Vorsehen einer Zwischenschicht als Schutz gegen mechanische Verletzung des Paßkörpers eine "Zweihandbedienung". Außerdem, und dies trifft insbesondere auf die Kunststoffhülse zu, wird durch diese Zwischenlage die im Bereich des Mittelteils ohnehin relativ geringe Schwingungs- bzw. Bewegungsenergie noch weiter gedämpft. Ein weiterer Nachteil ist darin zu sehen, daß, wenn man das Werkzeug mit dem Mittelteil auf den Paßkörper aufsetzt, die direkte Sicht auf den Paßkörper eingeschränkt ist.

Aus der US-A-4 219 619 ist ein Dentalinstrument zum Einsetzen von Kronen und Brücken bekannt, bei dem im Gegensatz zu dem im vorgenannten Dokument beschriebenen Verfahren mit niederfrequenten Vibrationen im Bereich zwischen 20 und 100 Hz gearbeitet wird. Des weiteren wird ein üblicher, niederviskoser Zement verwendet, der beim Einsetzen der Krone mittels der Übertragungskette Vibrator - Bißregistrat - Krone verflüssigt wird. Bei diesem Instrument ist das vordere Endteil auswechselbar am Handgriff gehaltert ist. Das Endteil enthält einen Dorn, auf dem verschiedene, den jeweiligen Anforderungen angepaßte Aufbißstücke aufgesetzt werden können, je nachdem, ob eine Brücke oder eine Krone eingesetzt werden soll. Das Aufbißteil wird zwischen der einzusetzenden Krone oder Brücke und dem Gegenzahn des Patienten gelegt und muß, während die von einem im Handgriff angeordneten Vibrator erzeugten Vibrationen übertragen werden, mit Kraft, und zwar unter Einbeziehung des Gegenkiefers oder durch Andrücken von Hand, gehalten werden. Das Einsetzen des Paßkörpers erfolgt hier also durch eine zweiseitige Krafteinleitung. Um die Vibrationen zu begrenzen, können die Aufbißstücke ein- oder beidseitig mit Dämpfungselementen versehen sein.

Die Vibrationen werden vom Kunststoffgehäuse des Handgriffes auf den Dorn übertragen. Der Dorn besteht bei dem einen beschriebenen Ausführungsbeispiel aus Kunststoff und ist leicht lösbar in den Handgriff eingesteckt. Auf den Dorn ist eine Kunststoffhülse mit demgegenüber weicherem Material aufgesetzt. Dieses Material ist so beschaffen, daß sich die Hülse unter dem Aufbißdruck verformen, sogar die Kontur der einzusetzenden Krone oder Brücke annehmen kann. Bei dem anderen beschriebenen Ausführungsbeispiel ist der Dorn in die Griffhülse eingeschraubt. Die über den Dorn geschobene Kunststoffhülse ist jedoch mit einem deutlichen Spiel aufgesetzt. Der so gebildete Spalt zwischen Dorn und Kunststoffhülse ist bewußt vorgesehen, um Vibrationen beim Aufbeißen zu dämpfen und auch um nach dem Einsetzen der Krone das axiale Entnehmen des Handgriffes mit Dorn zu erleichtern.

Beiden Ausführungen gemeinsam ist, daß sich mit ihnen keine Ultraschall-Schwingungen übertragen lassen.

Durch die zweiseitige Krafteinleitung ist die Handhabung mit diesem Instrument relativ umständlich. Störend ist vor allem, daß in der Regel die aktive Mitwirkung des Patienten beim Einsetzen des Paßkörpers erforderlich ist, bzw. daß, wenn das Andrücken auf das Aufbißteil vom Behandler vorgenommen wird, zum Einsetzen des Paßkörpers beide Hände gebraucht werden. Bei Mitwirkung des Patienten beim Einsetzen des Paßkörpers besteht die Gefahr, daß die vom Patienten aufzubringende Kraft vom Behandler nicht kontrolliert werden kann, wodurch unter Umständen die Gefahr einer Beschädigung oder Verletzung besteht.

Der im Anspruch 1 angegebenen Erfindung liegt die Aufgabe zugrunde, gegenüber der DE-A-4 032 505 eine Verbesserung zu schaffen und die genannten Nachteile zu vermeiden.

Erfindungsgemäß ist die an sich mit scharfen Kanten versehene und deshalb für das Abtragen von Zahnstein sowie überschüssigem Füllmaterial prädestinierte Spitze des Werkzeuges zur Einkopplung der Schwingungsenergie auf den Paßkörper vorgesehen. Damit ist ein Arbeiten in Einhandbedienung bei optimaler Sicht auf den Paßkörper möglich. Durch die an sich sehr viel bessere Ankoppelung an der Werkzeugspitze wird auch eine höhere Leistung erzielt, wodurch mit geringerem Andruck und damit auch mit geringerer Wärmeentwicklung gearbeitet werden kann.

In Verbindung mit der Verwendung eines geeigneten Haftmittels und unter Anwendung des erfindungsgemäß vorgeschlagenen Werkzeuges ist es möglich, große Spalte zwischen Zahn und Paßkörper zu vermeiden. Der Klebespalt kann praktisch bis auf die Korngröße des Klebers oder des Zements reduziert werden. Als Haftmittel kommen alle Haftmittel (Zemente und Kunststoffe) in Frage, bei denen sich bei Zufuhr von Energie, insbesondere Ultraschallenergie, in der vorgeschlagenen Verfahrensweise erreichbare Schichtdicken gegenüber bisherigen Verfahren minimieren lassen. Das Verfahren läßt sich mit Vorteil unter Verwendung von Zementen, wie Zinkphosphat-Zementen, Zinkoxyd-Eugenol-Zementen oder Glasionomer-Zementen sowie bei allen gängigen Füllkunststoffen und Composites-Werkstoffen einsetzen. Besondere Vorteile lassen sich unter Verwendung eines thixotropen Haftmittels erzielen. Ein weiterer wesentlicher Vorteil liegt in der Verwendung von Materialien, unabhängig von der Viskosität, die diese im Ausgangszustand besitzen.

Als bevorzugt wird die Verwendung von hochgefüllten abrasionsbeständigen Composites angesehen.

Weitere Vorteile für Behandelnden und Patient sind in dem geringeren Zeit- und Kraftaufwand zu sehen, der für die Positionierung der Paßkörper notwendig ist. Durch die Bewegung, die das Haftmittel infolge der Schwingungen erhält, kann die Verarbeitungszeit des Haftmittels deutlich verlängert werden. Die Gefahr eines zu raschen Abbindens des Haftmittels wird dadurch weiter verringert.

Das Werkzeug kann in bekannter Weise mit dem Schwingungserzeuger fest oder leicht lösbar, z.B. mittels einer Schraubverbindung, im Sinne einer Schwingungsübertragung verbunden sein. Es kann in bekannter Weise als gerades oder einseitig gebogenes Werkzeug ausgebildet sein; ebenso ist die Ausbildung mit einem Kontraknick denkbar. Der Schwingungserzeuger kann ein druckluft- oder elektrisch betriebener, vorzugsweise im Ultraschallbereich arbeitender Schwinger sein.

Die am freien Ende des Werkzeuges form- und kraftschlüssig gehalterte Kappe kann mit der Werkzeugspitze mittels einer Verschraubung oder mit Hilfe eines geeigneten Schnappverschlusses verbunden sein. Für einige Anwendungsfälle kann es vorteilhaft sein, die Kappe achspositioniert und frei drehbar mit dem Werkzeug zu verbinden.

Die Beschichtung bzw. die auf das Werkzeug aufsetzbare Kappe besteht aus einem nichtmetallischen Material, z.B. einem temperaturstabilen Kunststoff oder Keramikmaterial, wobei das Material bei der Schwingungsübertragung eine abtragungsresistente Eigenschaft aufweist.

Nachdem für den Paßkörper unterschiedliche Materialien (Keramik, Gold, Kunststoffe) in Frage kommen, sind die physikalischen Eigenschaften des Materials für die Schicht bzw. für die Kappe auf das Material des verwendeten Paßkörpers angepaßt; insbesondere ist die Härte des Schichtmaterials der Härte des Paßkörpers so angepaßt, daß bei der Schwingungsübertragung keine Abrasion am Paßkörper auftritt.

Nachfolgend werden mehrere Ausführungsformen der Erfindung näher beschrieben. Es zeigen:
Figur 1 ein zahnärztliches Instrument mit der erfindungsgemäßen Vorrichtung,
Figuren 2 und 3 mehrere Ausführungsformen eines Werkzeuges,
Figur 4 mehrere Ausführungsformen von auf die Werkzeugspitze aufsetzbaren Kappen.

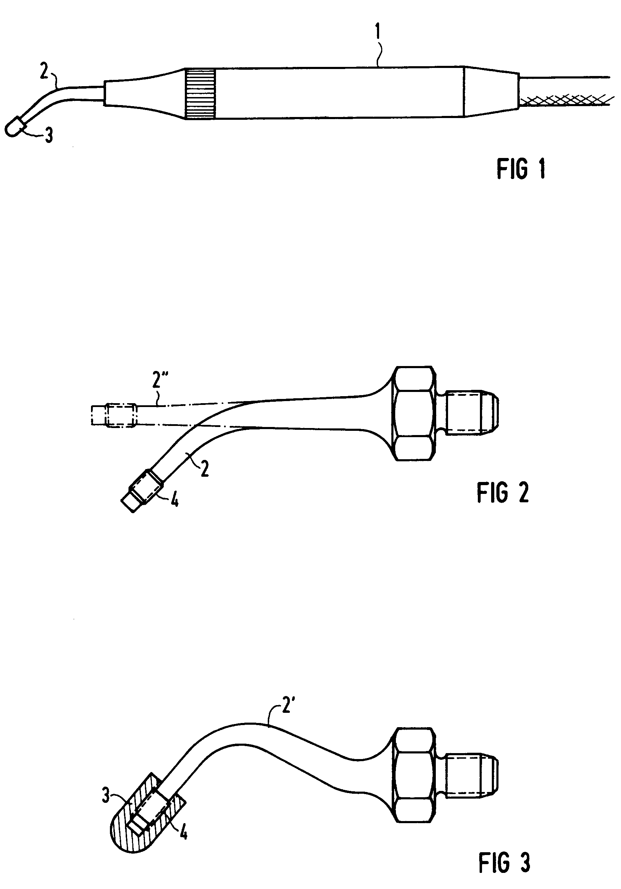

Die Figur 1 zeigt ein zahnärztliches Handstück mit der erfindungsgemaßen Vorrichtung. In einem Griffkörper 1 ist in bekannter Weise ein vorzugsweise im Ultraschallbereich arbeitender Schwingungserzeuger untergebracht. Der Schwingungserzeuger kann in bekannter Weise durch Druckluft oder auch elektrisch angetrieben sein. Mit dem Schwingungserzeuger gekoppelt ist ein stirnseitig aus dem Griffkörper 1 vorstehendes Werkzeug 2, an dessen freiem Ende eine Kappe 3 befestigt ist. Die an der Werkzeugspitze entstehenden Schwingungen können längs oder quer oder eine Kombination von Längs-und Querschwingungen sein, je nachdem, welche Form das Werkzeug einnimmt. Das Werkzeug 2 kann einseitig gebogen sein, wie in Figur 1 und in Figur 2 mit durchgezogenen Linien dargestellt; ebenso kann das Werkzeug einen Kontraknick aufweisen, wie in Figur 3 dargestellt (Pos. 2'). Für bestimmte Anwendungen kann das Werkzeug auch gerade ausgebildet sein, wie dies in Figur 2 gestrichelt eingezeichnet ist (Pos. 2'').

Die Figur 2 zeigt das Werkzeug 2 mit abgenommener Kappe 3, während bei der Ausführung nach Figur 3 die Kappe auf das Werkzeug aufgesetzt ist. Die Verbindung von Kappe und Werkzeug erfolgt vorteilhafterweise durch eine leicht lösbare Schraubverbindung 4.

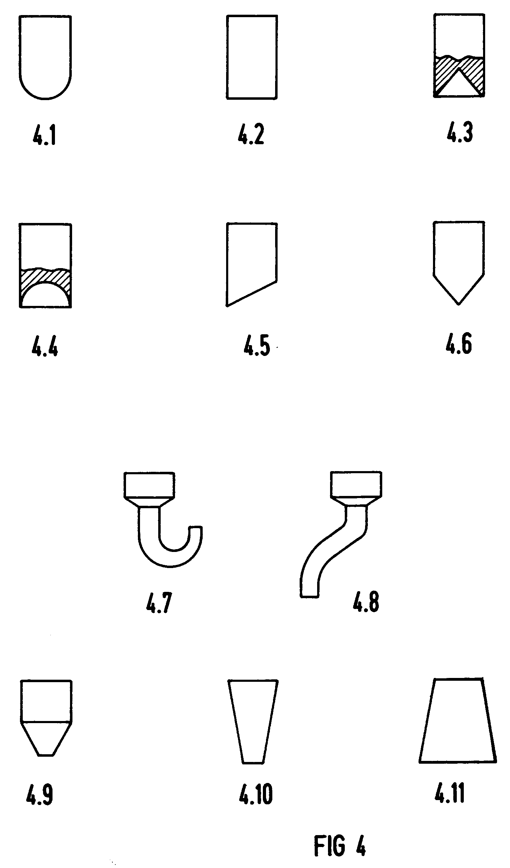

Die Figur 4 zeigt einige mögliche Ausführungsformen von auf das Werkzeug aufsteckbaren Kappen.

Die äußere Gestaltung dieser Varianten orientiert sich im wesentlichen an der Form des einzusetzenden Paßkörpers bzw. an der Fläche, an der das Werkzeug an den Paßkörper angelegt werden soll. Die Kappe kann deshalb sowohl runden als auch quadratischen Querschnitt haben; sie kann, wie unter 4.3 und 4.4 dargestellt, stirnseitig pyramiden- oder kugelförmige Ausnehmungen aufweisen, wenn dies von der Anlage her erforderlich sein sollte. Ebenso sind, wie aus 4.7 und 4.8 hervorgeht, hakenförmige Kappen denkbar, die, wie auch die übrigen, gegebenenfalls um die Längsachse der Werkzeugspitze drehbar an dieser gehaltert sein können.

## Patentansprüche

1. Vorrichtung zum paßgenauen Aufbringen und Befestigen eines zahnmedizinischen Paßkörpers mit Hilfe eines zwischen Paßkörper und Zahn einbringbaren, vorzugsweise thixotropen Haftmittels, wobei die Vorrichtung ein Werkzeug (2) aufweist, welches mit einem hochfrequenten, vorzugsweise im Ultraschallbereich arbeitenden Schwingungserzeuger verbunden oder verbindbar ist, und wobei die Vorrichtung ferner ein am Werkzeug (2) auswechselbar gehaltertes Übertragungsteil (3) aufweist, welches an den Paßkörper anlegbar ist, und bei dem zumindest die äußere, mit dem Paßkörper in Verbindung kommende Schicht aus einem nichtmetallischen, zur Einkoppelung der Schwingungsenergie auf den Paßkörper geeigneten Material besteht, welches eine abtragungsresistente Eigenschaft und eine Härte aufweist, die derart an die des Paßkörpers angepaßt ist, daß bei Übertragung der Schwingungsenergie keine Abrasion am Paßkörper eintritt, dadurch gekennzeichnet, daß das Übertragungsteil (3) am freien Ende des Werkzeugs form- und kraftschlüssig gehaltert ist.

2. Vorrichtung nach Anspruch 1, bei der das Übertragungsteil als auf das freie Ende der Werkzeugspitze aufsetzbare Kappe(3)ausgebildet ist.

3. Vorrichtung nach Anspruch 2, bei der die Kappe(3) vollständig aus dem Schichtmaterial gebildet ist.

4. Vorrichtung nach Anspruch 2 oder 3, bei der die Kappe(3) drehbar am Werkzeug(2) gehaltert ist.

5. Vorrichtung nach einem der Ansprüche 2 bis 4, bei der auf das Werkzeug(2) alternativ eine Kappe aus einer Reihe von im Querschnitt und in der äußeren Gestaltung unterschiedlichen, jedoch in den Anschlußmaßen gleichen Kappen(Fig.4) aufsetzbar ist.

## Claims

1. Device for the accurately fitting application and fastening of a dental fitting body with the aid of an adhesive which can be introduced between the fitting body and the tooth and which is preferably thixotropic, whereby the device has a tool (2) which is or can be connected to a high-frequency oscillation generator preferably operating in the ultrasonic range, and whereby, moreover, the device has a transfer part (3) which is supported in a replaceable manner on the tool (2), which transfer part can be applied to the fitting body, and where at least the outer layer coming into contact with the fitting body consists of a non-metallic material suitable for coupling the oscillation energy on to the fitting body, the material having a wear-resistant property and a hardness which is adapted to that of the fitting body in such a way that upon transfer of the oscillation energy no abrasion occurs on the fitting body, characterized in that the transfer part (3) is supported in a form-locking and frictional manner on the free end of the tool.

2. Device according to claim 1, where the transfer part is constructed as a cap (3) which can be attached to the free end of the tool tip.

3. Device according to claim 2, where the cap (3) is formed completely from the layer material.

4. Device according to claim 2 or 3, where the cap (3) is rotatably supported on the tool (2).

5. Device according to one of claims 2 to 4, where there can be attached to the tool (2) alternatively a cap from a series of caps (Figure 4) which are different in cross section and in outer shape but have the same fitting dimensions.

## Revendications

1. Dispositif pour mettre en place et pour fixer, d'une manière assistée et de façon précise, une ébauche de prothèse médico-dentaire à l'aide d'un agent adhésif, de préférence thixotrope, pouvant être inséré entre l'ébauche de prothèse et la dent, le dispositif possédant un outil (2) qui est relié ou peut être relié à un générateur d'oscillations à haute fréquence, opérant de préférence dans la gamme des ultrasons, le dispositif comportant en outre une partie de transmission (3) fixée de façon à être interchangeable et qui peut être appliquée sur l'ébauche de prothèse, et dans lequel au moins la couche extérieure, qui vient en contact avec l'ébauche de prothèse, est constituée par un matériau non métallique, convenant pour injecter l'énergie des oscillations dans l'ébauche de prothèse et qui possède une propriété de résistance à l'enlèvement et une dureté, qui est adaptée à celles de l'ébauche de prothèse de telle sorte que, lors de la transmission de l'énergie des oscillations, il n'apparaît aucune abrasion au niveau de l'ébauche de prothèse, caractérisé par le fait que la partie de transmission (3) est fixée selon une liaison par formes complémentaires et selon une liaison de force sur l'extrémité libre de l'outil.

2. Dispositif suivant la revendication 1, dans lequel la partie de transmission est réalisée sous la forme d'un capuchon (3) pouvant être monté sur l'extrémité libre de la pointe de l'outil.

3. Dispositif suivant la revendication 1 ou 2, dans lequel le capuchon (3) est entièrement formé par le matériau en forme de couche.

4. Dispositif suivant la revendication 2 ou 3, dans lequel le capuchon (3) est fixé de manière à pouvoir tourner sur l'outil (2).

5. Dispositif suivant l'une des revendications 2 à 4, dans lequel un capuchon parmi une série de capuchons qui ont des sections transversales et des configurations extérieures différentes, mais qui ont des cotes de raccordement identiques (figure 4), peut être mis en place alternativement sur l'outil (2).
